# EUROPÄISCHE PATENTSCHRIFT

(11) **EP 0 350 836 B1**
(45) Veröffentlichungstag und Bekanntmachung des Hinweises auf die Patenterteilung: **30.03.1994**
(21) Anmeldenummer: 89112581.7
(22) Anmeldetag: 10.07.1989
(51) Int. Cl.: H04Q 11/04, H04Q 3/545

(54) **Kommunikationssystem mit vorgegebenen, von einer Kommunikationsanlage durch Informationsübermittlung bestimmte und gesteuerte Funktionen versehenen Kommunikationsendeinrichtungen**
Communication system with terminals having features determined and controlled by the communication link
Système de communication comprenant des terminaux ayant des fonctions déterminées et commandées par la voie de communication

(30) Priorität: 14.07.1988 DE 3823913
(43) Veröffentlichungstag der Anmeldung: 17.01.1990
(73) Patentinhaber: SIEMENS AKTIENGESELLSCHAFT, 80333 München (DE)
(72) Erfinder: Kuhlmann, Klaus, D-8000 München 5 (DE); Weiss, Albert, D-8000 München 80 (DE); Dibos, Hermann, D-7537 Remchingen (DE); Kuhn, Klaus, D-8034 Germering (DE)

(56) Entgegenhaltungen:
- EP-A- 0 228 204
- EP-A- 0 231 630
- EP-A- 0 264 890
- EP-A- 0 347 644
- EP-A- 0 350 844
- EP-A- 0 356 568
- GB-A- 2 196 513
- GB-A- 2 213 024
- PHILIPS TELECOMMUNICATION REVIEW, vol. 45, no. 3, September 1987, HILVERSUM, NL, Seiten 35-41; P.Hesdahl: "The digital voice/data-terminal SOPHO-SET S375 "

## Beschreibung

In Kommunikationsanlagen und in den an diese angeschlossenen Kommunikationsendgeräten werden die erforderlichen vermittlungs- und betriebstechnischen Funktionen überwiegend durch die Steuerungen der Kommunikationsanlagen realisiert und koordiniert. Der erforderliche Signalisierungs- und Betriebstechnik-Informationsaustausch mit den Kommunikationsendgeräten erfolgt jeweils über einen Signalisierungsduplexkanal mit Hilfe einer meldungsorientierten Übermittlungsprozedur. Die einzelne Funktionen und deren Zusammenwirken bestimmenden geeigneten Programme sind in den Programmspeichern der Steuerungen gespeichert. In die Programme werden variable Informationen, wie z. B. Informationen über Typ, Ausstattungs- und Leistungsmerkmale sowie Anschlußpositionen der Kommunikationsendgeräte über Parameter eingeführt. Die den Parametern zugehörigen Daten sind hierbei für jedes Kommunikationsendgerät separat in einem hierfür vorgesehenen Bereich der üblicherweise in einer programmgesteuerten Kommunikationsanlage eingerichteten Datenbasis gespeichert. Aufgrund der zentralen Verarbeitung und Verwaltung und der parametergesteuerten Funktionen können einem Kommunikationsendgerät jeweils unterschiedliche Funktionen endgeräteindividuell zugeordnet und geändert werden. Die steigende Nachfrage nach komfortableren und damit komplexeren Leistungsmerkmalen, wie z. B. Anzeige der Rufnummer des rufenden beim gerufenen Kommunikationsendgerät, bedingt in den Kommunikationsanlagen eine erhebliche Steigerung der Anzahl insbesondere der Vermittlungs- und Koordinierungsfunktionen und führt zu einer wesentlich höheren dynamischen Belastung ihrer Steuerungen. Da die Kommunikationsendgeräte in zunehmendem Maße mit Mikroprozessoren- bzw. Mikrorechnersystemen ausgestattet sind, wird ein Teil der vermittlungs- und betriebstechnischen Funktionen bereits im Kommunikationsendgerät realisiert.

In diesem Zusammenhang ist aus der Patentanmeldung GB-A-2196513 ein Telefonsystem bekannt, bei dem durch die Übermittlung einer Hilfsinformation bzw. einer Attributinformation von einer Vermittlung zu Kommunikationsendgeräten in diesen eine der Hilfsinformation zugeordnete Einrichtung oder Funktion, insbesondere eine Anzeigeeinrichtung bzw. Anzeigefunktion, angesteuert wird. Durch die Übermittlung der Hilfsinformation wird der Arbeitsmodus bestimmt, in dem die zusammen mit der Hilfsinformation übermittelten Nachrichten im Kommunikationsendgerät verarbeitet werden.

Des weiteren ist es bekannt, daß an eine Kommunikationsanlage Einzel- oder Reihenanlagen, Vermittlungsplätze und betriebstechnische Konsolen anschließbar sind. Hierbei sind den Kommunikationsendgeräten jeweils unterschiedliche vermittlungs-und betriebstechnische Funktionen zugeordnet. Diese sind in bestehenden Netzen jedem Kommunikationsendgerät in Form von in ihrem Programmspeicher gespeicherten Programmen und diesen zugehörigen, die Parameter repräsentierenden Daten im Datenspeicher starr zugeordnet. Eine Änderung dieser Zuordnung ist nur durch einen physikalischen Programmspeicherwechsel und/oder deren zugehörige Daten möglich.

Die der Erfindung zugrundeliegende Aufgabe besteht darin, ein Kommunikationssystem derart auszugestalten, daß die Steuerung der darin enthaltenen Kommunikationsanlage trotz zusätzlich zu realisierender Leistungsmerkmale dynamisch entlastet und die endgeräteindividuelle flexible Zuordnung von Funktionen und Prozeduren zu dem jeweiligen Kommunikationsendgerät erhalten bleibt.

Die Aufgabe wird ausgehend von den im Oberbegriff genannten Merkmalen durch die kennzeichnenden Merkmale des Anspruches 1 gelöst.

Der Kerngedanke der Erfindung ist darin zu sehen, daß im Programmspeicher zumindest für Kommunikationsendgeräte gleichen Typs dasselbe Programm gespeichert ist und die Kommunikationsanlage durch Übermitteln von entsprechenden, die Parameter repräsentierenden Daten - im weiteren mit Parameterdaten bezeichnet - die Funktionen bestimmt werden, die für den jeweiligen Endgerätetyp und die jeweilige Kommunikationsendgeräteausstattung vorgesehen sind. Besonders vorteilhaft ist die Realisierung eines einzigen Programmes - unabhängig vom Kommunikationsendgerätetyp - für alle an die Kommunikationsanlage anschließbaren Kommunikationsendgeräte. Da dieses Programm alle einem Kommunikationsendgerät zuordenbaren Funktionen enthält, wird hierbei die größte Flexibilität beim Zuordnen von Funktionen an die Kommunikationsendgeräte erreicht. Durch die von der Kommunikationsanlage übermittelten Parameterdaten werden zusätzlich zu den Funktionen die für das Kommunikationsendgerät bestimmten Leistungsmerkmale und Berechtigungen definiert. Des weiteren werden durch die übermittelten Parameterdaten die prozedurale Steuerung der vermittlungs- und betriebstechnischen Funktionen für die verschiedenen Kommunikationsendgerätetypen und die diesen zugeordneten Leistungsmerkmale festgelegt. Die Parameterdaten werden hierbei mit einer speziellen Übermittlungsprozedur von der Kommunikationsanlage in einen Datenspeicher der Kommunikationsendgeräte übermittelt. Diese Parameterdaten werden von einem durch ein entsprechendes Programm realisierten Prozeß verwaltet, der zusätzliche Zugriffsprozeduren für den Zugriff von weiteren im Kommunikationsendgerät vorgesehenen Prozessen bereitstellt. Durch diese weiteren Prozesse sind die einem Kommunikationsendgerät zugeordneten Funktionen realisiert. Der Informationsaustausch unter den einzelnen Prozessen erfolgt hierbei über ein einheitliche Schnittstellen aufweisendes Betriebssystem - siehe Anspruch 2. Lediglich der Prozeß, der das Bindeglied zwischen Software- und Hardwarekomponenten des Kommunikationsendgerätes darstellt, wird direkt von denjenigen Prozessen angesteuert, in deren Ablauf Hardware-Elemente anzusteuern sind.

Die manuellen Eingabemittel sind im Kommunikationsendgerät vorzugsweise durch Tastenelemente realisiert. Die Tasten sind im Sinne einer Mehrfachausnutzung in zwei Tastenebenen unterteilt. Dies bedeutet, daß eine Taste in Abhängigkeit von der Ebeneneinstellung zwei Bedeutungen aufweisen kann. Die Zuordnung der Bedeutung der Tasten - z. B. Rückruftaste - in allen Tastenebenen und der durch die Tastenbetätigung eingeleiteten vermittlungs- oder betriebstechnischen Prozedur wird durch die von der Kommunikationsanlage übermittelten Parameterdaten festgelegt - siehe Anspruch 3 und 7.

Akustische Ein- und Ausgabemittel stellen die üblicherweise im Handapparat eingesetzten Mikrophon- und Hörkapseln dar. Darüberhinaus werden für optionale Leistungsmerkmale - wie z. B. "Lauthören", "Freisprechen" - zusätzlich Mikrophon und Lautsprecher im Kommunikationsendgerät angeordnet. Durch von der Kommunikationsanlage übermittelte Parameterdaten wird im wesentlichen die Berechtigung zu deren Nutzung durch den jeweiligen Teilnehmer bestimmt - siehe Anspruch 4.

Optische Ausgabemittel sind in neuzeitlichen Kommunikationsendeinrichtungen überwiegend durch Flüssigkeitskristall-(LCD)-Anzeigen oder Leuchtdioden (LED) realisiert. Für die verschiedenen Kommunikationsendgerätetypen, wie Einzel-, Reihenanlagen-, Vermittlungsplatz- und Bedien- und Wartungs-Kommunikationsendeinrichtungen, sind aufgrund der unterschiedlichen Anforderungen hinsichtlich des Anzeigevolumens von Informationen unterschiedliche LCD-Anzeigen vorgesehen. Beispielsweise können zwei Zeilen à 24 Zeichen oder 8 Zeilen à 40 Zeichen vorgesehen sein. Des weiteren sind den LCD-Anzeigen mehrere virtuelle Anzeigenebenen zugeordnet. Dies bedeutet, daß die Anzeigeinformationen in mehreren Ebenen - meist Prioritätsebenen - gespeichert und nach entsprechender Steuerung die entsprechenden Ebenen angezeigt werden. Durch die von der Kommunikationsanlage übermittelten Parameterdaten wird die Anzahl der Anzeigeebenen, die Aufteilung innerhalb dieser Ebenen in Anzeigefelder und der von der Größe der LCD-Anzeige abhängige, verwendete Zeichensatz bestimmt - siehe Anspruch 5.

Bei Einsatz eines Kommunikationsendgerätes als betriebstechnisches Terminal werden die den Tasten zugeordneten physikalischen Bitmuster nach einem Tastenanreiz ohne weitere Bewertung direkt vom Kommunikationsendgerät an die Kommunikationsanlage übermittelt - siehe Anspruch 6.

Die Parameterdaten werden entweder nach einer Anforderung durch ein Kommunikationsendgerät oder nach einer internen Anforderung in der Kommunikationsanlage von dieser an die Kommunikationsendeinrichtung übermittelt. Im Kommunikationsendgerät kann eine Initialisierung nach jeder Neusynchronisierung der Signalisierung, jeder Änderung des Ausbaues des Kommunikationsendgerätes oder jedem Zurücksetzen ihrer Steuerung eingeleitet werden. Hierzu sind Meldungen vorgesehen, deren Meldungsformat mit dem im Signalisierungskanal bereits verwendeten übereinstimmt. Die im Signalisierungskanal verwendete meldungsorientierte Übermittlungsprozedur dient dem Austausch von Signalisierungs- und betriebstechnischen Informationen zwischen der Kommunikationsanlage und den jeweiligen Kommunikationsendgeräten. Wie bereits erläutert, kann die Initialisierung einer Übermittlung von Parameterdaten entweder von einem Kommunikationsendgerät oder von der Kommunikationsanlage ausgehen. Bei einer Initialisierung durch ein Kommunikationsendgerät wird in diesem eine Parameteranforderungsmeldung gebildet und an die Kommunikationsanlage übermittelt. Diese Parameteranforderungsmeldung enthält im wesentlichen diejenigen Informationen, die in der Kommunikationsanlage die Identifikation des jeweiligen Kommunikationsendgerätes ermöglicht. Diese Identifikationsinformation setzt sich aus einer Kommunikationsendgeräte-Typinformation, einer Kommunikationsendgeräte-Ausstattungsinformation und einer Kommunikationsendgeräte-Positionsinformation zusammen - siehe Anspruch 10. Die Kommunikationsendgeräte-Typinformation wird durch eine Gerätegrößen- und eine Geräteausbauinformation gebildet - siehe Anspruch 10. Eine Geräteausbauinformation repräsentiert beispielsweise einen vorgegebenen Tasten- und Anzeigenausbau eines Kommunikationsendgerätes.

In der Kommunikationsanlage wird entweder nach Empfang einer Parameteranforderungsmeldung oder einer systeminternen Anforderung eine Parameterstartmeldung gebildet und an die jeweiligen Kommunikationsendgeräte übermittelt. Mit Hilfe dieser Parameterstartmeldung werden die Adressenkriterien und Index- sowie Subindexinformationen übermittelt. Die Adressenkriterien enthalten Informationen, durch die bestimmt wird, an welche Kommunikationsendgeräte die Parameterstartmeldung und die folgenden Parametermeldungen übermittelt werden. So kann die Parameterstartmeldung gezielt an ein einziges Kommunikationsendgerät, an eine bestimmte Gruppe von Kommunikationsendgeräten gleichen Typs und gleicher Ausstattung oder an alle Kommunikationsendgeräte übermittelt werden - siehe Ansprüche 8 und 9.

Überwiegend gezielt an ein Kommunikationsendgerät wird die Parameterstartmeldung übermittelt, wenn eine Parameteranforderungsmeldung von einem Kommunikationsendgerät empfangen wurde. An eine Gruppe von Kommunikationsendgeräten wird die Parameterstartmeldung beispielsweise dann übermittelt, wenn für diese Kommunikationsendgerätegruppe die Parameterdaten geändert wurden. An alle Kommunikationsendgeräte wird eine Parameterstartmeldung beispielsweise im Sinne einer Aktualisierung von Uhrzeit und Kalender übermittelt. Durch die Index- sowie Subindexinformation werden die Art und die Unterarten von Parametern angegeben, deren Parameterdaten anschließend übermittelt werden. Die jeweils einer Parameterstartmeldung zugeordneten Parameterdaten werden durch Parametermeldungen an die jeweiligen Kommunikationsendgeräte übermittelt. Da aus sicherungstechnischen Gründen meist die Länge der Parametermeldungen begrenzt wird, werden größere Mengen von Parameterdaten durch mehrere Parametermeldungen übermittelt. Zur kommunikationsendgeräteseitigen Überprüfung der übermittelten Parameterdaten wird in die Parameterstartmeldung beispielsweise eine Längeninformation eingefügt, durch die beispielsweise die Anzahl der Bits oder Bytes der zu der Parameterstartmeldung zu übermittelnden Parameterdaten angegeben ist - siehe Anspruch 11. Bei fehlerhaft übertragenen Meldungen kann jeweils von der erkennenden Einrichtung eine die fehlerhaft anzeigende Information an die jeweils andere Einrichtung übermittelt werden.

Für eine weitere Sicherung der einer Parameterstartmeldung zugeordneten Parameterdaten wird in die Parameterstartmeldung eine das Übermittlungsende anzeigende Meldungscodeinformation eingefügt - siehe Anspruch 12. Diese Sicherungsmaßnahme bewirkt, daß das Übermittlungsende von einer Parameterstartmeldung zugeordneten Parameterdaten auch dann eindeutig erkennbar ist, wenn die die summarische Überprüfung ermöglichenden Sicherungsinformationen fehlerhaft übermittelt wurden.

Im folgenden wird ein Ausführungsbeispiel der Erfindung anhand von sechs Zeichnungen erläutert. Dabei zeigen
- Fig. 1: ein Blockschaltbild einer Kommunikationsanlage einschließlich Kommunikationsendgeräte-Anschlußbereich,
- Fig. 2: ein Blockschaltbild der Hardwarekomponenten eines Kommunikationsendgerätes,
- Fig. 3: in einem Blockschaltbild die Prozeßarchitektur eines nach Fig. 2 realisierten Kommunikationsendgerätes,
- Fig. 4: den Aufbau einer Parameteranforderungsmeldung,
- Fig. 5: den Aufbau einer Parameterstartmeldung und
- Fig. 6: den Aufbau einer Parametermeldung.

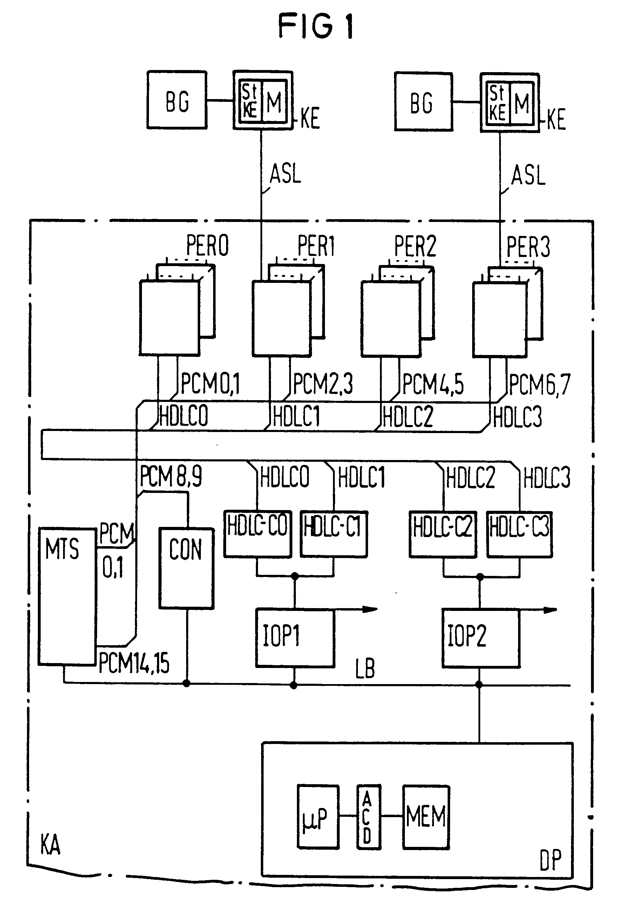

Fig. 1 zeigt beispielhaft ein dem erfindungsgemäßen Verfahren zugrundeliegendes Kommunikationssystem, das durch eine Kommunikations- bzw. Vermittlungsanlage KA und durch an sie angeschlossene Kommunikationsendgeräte KE gebildet wird. Die Kommunikationsanlage KA ist im wesentlichen in drei hierarchische Strukturebenen unterteilt. Die im wesentlichen dem Anschluß von Endgeräten und Leitungen dienende Peripherieebene wird durch drei Peripheriemodule PER1, PER2, PER3 gebildet, die jeweils aus mehreren Teilnehmeranschlußbaugruppen bzw. Leitungsanschlußbaugruppen derart gebildet sind, daß maximal 64 Ports - z. B. 32 Zweidraht-Leitungsanschlüsse - an dem Peripheriemodul PER1...PER3 zugänglich sind.

Die Teilnehmeranschlußbaugruppen können beispielsweise dem Anschluß analoger Teilnehmerendgeräte dienen. Sie weisen dann üblicherweise je Endgerät eine Schnittstelleneinrichtung mit Ruf- und Schleifenschlußindikation auf, der jeweils eine Prozessoreinrichtung zur Analog/Digital- bzw. Digital/Analog-Wandlung und zur programmierbaren Eingangsimpedanz bzw. Pegelanpassung zugeordnet ist. Eine mögliche Realisierung dieser Bestandteile einer Teilnehmeranschlußbaugruppe ist der US-A-4 381 561 zu entnehmen. Die Schnittstelle zwischen maximal 16 solcher leitungsindividuellen Einrichtungen und kommunikationsanlageninternen PCM-Verbindungen bzw. HDLC-Steuerleitungen (High Level Data Link Control) wird durch eine Baugruppen-Prozessorsteuerung gebildet, die in Aufbau und Wirkungsweise beispielsweise dem in der US-A-4 694 452 beschriebenen Prozessor entsprechen kann. Weitere Details der Funktion dieses Prozessors sind der Produktschrift der Firma Siemens AG, PBC Peripherial Board Controller PEB 2050 (SM 205) Preliminary Technical Description (Part 1) Ordering Number B/2684-101, zu entnehmen.

In jedem der Peripheriemodule PER1, PER2, PER3 können allein, zusätzlich oder in Kombination andere Anschlußbaugruppen für beispielsweise digitale oder ISDN-Geräte bzw. Verbindungsleitungen vorgesehen sein. Für das Ausführungsbeispiel sei angenommen, daß überwiegend digitale bzw. ISDN-orientierte Kommunikationsendgeräte KE angeordnet sind. An diese Anschlußbaugruppen sind digitale Kommunikationsendeinrichtungen KE über meist integrierte Übertragungstechnik und digitalen Anschlußleitungen ASL angeschlossen. Diese Kommunikationsendgeräte KE sind jeweils mit einer meist in Mikroprozessortechnik realisierten Steuerung ST-KE und mit einem jeweils in einen Programm- und Datenspeicher unterteilten Speicher M ausgestattet. In dem beispielsweise als nicht flüchtiger Speicher realisierten Datenspeicher werden neben individuellen Benutzerdaten - z. B. Rufnummern - auch die Programmparameterdaten gespeichert. An die Kommunikationsendgeräte KE sind jeweils über eine geeignete Schnittstelle Beistellgeräte BG anschließbar. Dies können beispielsweise Rufnummernspeicher oder Chipkartenleser sein. Die Steuerung der Beistellgeräte BG wird zumindest teilweise von der Steuerung StKE des Kommunikationsendgerätes übernommen.

Die im wesentlichen durch Baugruppen-Prozessorsteuerungen und wenigstens einen der Koordinierung derselben dienenden Mikroprozessor gebildeten Modul-Prozessorsteuerungen verwalten jeweils zwei PCM-strukturierte Verbindungen (PCM-Highways) PCM2, PCM3; PCM4, PCM5; PCM6, PCM7 und jeweils eine doppelgerichtete Verbindung zur Übergabe und Aufnahme von Steuerinformationen, die im standardisierten Übertragungsverfahren HDLC übertragen werden. Ein weiteres Peripheriemodul PER0 dient der Versorgung des Kommunikationssystems mit Hörtönen, Ansagen und Musikeinspielungen während des Haltezustandes von Verbindungen. Das zusätzliche Peripheriemodul PER0 enthält außerdem Hörzeichenempfänger, Sende- und Empfangseinrichtungen für im Mehrfrequenzcode-Verfahren übertragene Wählzeichen sowie Testsender und Testempfänger. Das zusätzliche Peripheriemodul PER0 ist in ähnlicher Weise wie die Peripheriemodule PER1, PER2, PER3 über zwei PCM-Highways PCM0, PCM1 sowie über eine Informationsübertragungsstrecke HDLC0 angeschaltet.

Die nächste Strukturebene des digitalen Kommunikationssystems wird durch insgesamt vier (Steuerinformation-) Übermittlungsbausteine HDLC-C0, HDLC-C1, HDLC-C2, HDLC-C3 (HDLC-Controller) sowie durch zwei Input/Output-Prozessoren IOP1, IOP2 gebildet, von denen der Input/Output-Prozessor IOP1 den beiden Übermittlungsbausteinen HDLC-C0 und HDLC-C1, der Input/Output-Prozessor IOP2 dagegen den Übermittlungsbausteinen HDLC-C2, HDLC-C3 zugeordnet ist.

Da die HDLC-Norm für den Austausch von Daten, Befehlen und Meldungen in vielen einschlägigen praktisch realisierten Systemen benutzt wird, sind entsprechende (Steuerinformation-) Übermittlungsbausteine in Form integrierter Schaltkreise realisiert; die in der Fig. 1 dargestellte Kommunikationsanlage nutzt diese Bausteine (HDLC-Controller) in der üblichen Weise, so daß keine Hardware- oder Softwareanpassungen für den Einsatz dieser Bausteine in der Kommunikationsanlage erforderlich sind. Im Rahmen der Kommunikationsanlage ist in den in der HDLC-Norm festgelegten Datenübertragungsblöcken das Blockprüfungsfeld von besonderer Bedeutung, da mit der in diesem Feld übertragenen Blockprüfzeichenfolge eine gegen Fehler gesicherte Übergabe von Steuerinformationen möglich ist.

In die gleiche Strukturebene wie die (Steuerinformation-) Übermittlungsbausteine HDLC-C0...HDLC-C3 gehört auch ein digitaler Koppelfeldbaustein MTS, an den sämtliche PCM-Highways PCM0, PCM1...PCM14, PCM15 angeschlossen sind. Der digitale Koppelfeldbaustein ist beispielsweise durch den integrierten Schaltkreis PEB 2040, Siemens AG, realisiert. Aufbau und Wirkungsweise eines digitalen Koppelfeldbausteins sind beispielsweise in der US-A-3 678 206 beschrieben.

Ebenfalls in die Strukturebene der Übermittlungsbausteine HDLC-C0...HDLC-C3 und des digitalen Koppelfeldbausteines MTS eingefügt ist ein Konferenz-Netzwerk CON, das mit zwei weiteren PCM-Highways PCM8, PCM9 an den digitalen Koppelfeldbaustein MTS angeschlossen ist. Eine mögliche Realisierung für das Konferenz-Netzwerk CON ist in der US-A-4 054 757 beschrieben.

Der digitale Koppelfeldbaustein MTS und das Konferenz-Netzwerk CON sind ebenso wie die beiden Input/Output-Prozessoren IOP1, IOP2 an einen lokalen Multiplexbus LB angeschlossen, der die Schnittstelle zur hierarchisch obersten Strukturebene der digitalen Kommunikationsanlage darstellt. Diese Strukturebene wird durch einen zentralen Steuerprozessor DP gebildet, der das Zusammenwirken aller Bausteine und Module der Kommunikationsanlage koordiniert. Neben takterzeugenden Einrichtungen ist der zentrale Steuerprozessor DP mit einem Mikroprozessor µP, einer vorgeschalteten Zugangssteuerung ACO und einem Speicher MEM ausgestattet. In diesem Speicher MEM sind die Programmparameterdaten PD für jedes Kommunikationsendgerät KE in einem hierfür vorgesehenen Speicherbereich gespeichert. Wesentliche Funktionen des zentralen Steuerprozessors sind also die Speicherung und anforderungsgerechte Abarbeitung von vermittlungstechnischen Programmen und peripheriezugewandt die Steuerung und Überwachung des lokalen Bus LB. Zusätzliche übliche Funktionen des zentralen Steuerprozessors sind betriebstechnische Abwicklung, sicherheitstechnische Anzeigen sowie Takterzeugungen.

Das erfindungsgemäße Verfahren ist für das Übermitteln von Programmparameterdaten zwischen der Kommunikationsanlage KA und den an sie angeschlossenen Kommunikationsendgeräten KE vorgesehen, d. h. im wesentlichen zwischen Kommunikationsendgerät KE und den Peripheriemodulen PER1...PER3. Wie eingangs erläutert, ist die prinzipielle Struktur der meldungsorientierten Übermittlungsprozedur bereits in der Patentanmeldung DE-A-3 732 679 vorgeschlagen. Die kommunikationsanlagen- und kommunikationsendgeräteinternen Funktionen zur Weiterbearbeitung der Meldungen der verwendeten Übermittlungsprozedur sind in den jeweiligen Steuereinrichtungen mit Hilfe entsprechender Software realisiert. Da diese Funktionen für die Erläuterung des erfindungsgemäßen Verfahrens nicht erforderlich sind, wurde auf eine detaillierte Darstellung verzichtet.

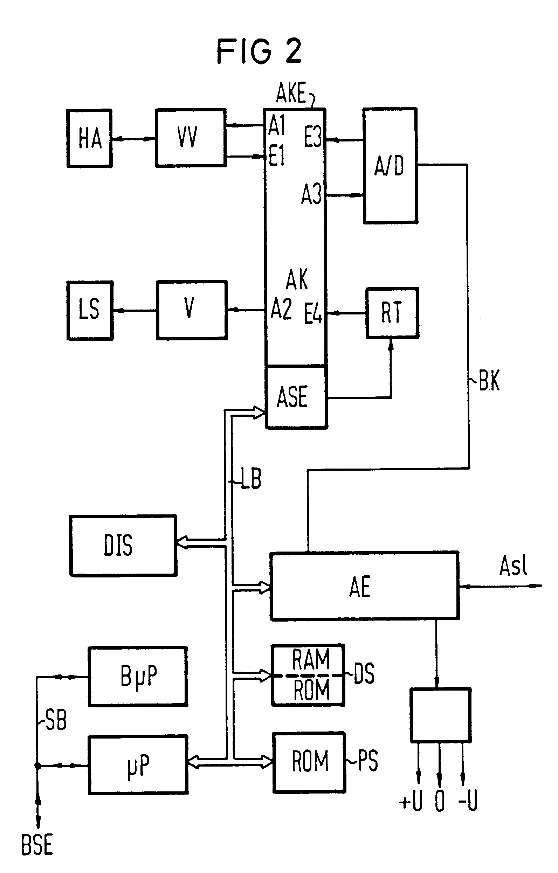

Fig. 2 zeigt ein Hardware-Blockschaltbild eines Kommunikationsendgerätes ohne Freisprecheinrichtung. Die zentrale Einrichtung zur Steuerung der Teilnehmer-Bedienerprozeduren, zur Steuerung aller im Kommunikationsendgerät zu übermittelnder akustischer Signale und zur Steuerung der Signalisierung mit der Kommunikationsanlage ist durch ein Mikroprozessorsystem µP realisiert. Beispielsweise kann dieses Mikroprozessorsystem µP durch einen Siemens Mikroprozessor SAB 80 C 31 gebildet sein. Über einen aus Steuer-, Adreß- und Datenleitungen gebildeten lokalen Bus LB ist das Mikroprozessorsystem µP mit einem Programmspeicher PS und einem Datenspeicher DS verbunden. Der in ROM-Speichertechnik realisierte Programmspeicher PS ist beispielsweise für ein maximal 64 kByte umfassendes Programm ausgelegt. Der ebenfalls beispielsweise 64 kByte umfassende Datenspeicher DS kann beispielsweise zur Hälfte einen in ROM-Speichertechnik ausgeführten Festspeicher - für Festdaten, Parameterdaten und Tabellen - und zur anderen Hälfte einen in RAM-Speichertechnik ausgeführten Speicher - beispielsweise zur Speicherung benutzerindividueller Daten - enthalten. Das Mikroprozessorsystem µP weist zusätzliche eine serielle Busschnittstelle auf. Diese serielle Busschnittstelle ist über den seriellen Bus SB mit einem Bedienfeld-Mikroprozessorsystem BµP verbunden. Über diesen seriellen Bus SB werden zusätzlich auch die an die Kommunikationseinrichtung angeschlossenen Beistellgeräte BSE betrieben. In dem Bedienfeld-Mikroprozessorsystem BµP werden die von den Bedienelementen erzeugten codierten Informationen erkannt, über den seriellen Bus SB zum Mikroprozessorsystem µP seriell übertragen und dort zu Signalisierungsinformationen und zu Bedienerführungsinformationen - beispielsweise für Leuchtdioden, Töne und Anzeigen in einer Anzeigeeinrichtung - weiterverarbeitet.

Des weiteren ist an den lokalen Bus LB eine Anzeigeeinrichtung DIS angeschlossen. Die Anzeigeeinrichtung DIS ist beispielsweise durch ein LCD-Display (zwei Zeilen à 24 Zeichen) realisiert.

Dieses LCD-Display wird zur Anzeige von Ziffern und Klartext eingesetzt. Bei Verwendung des Kommunikationsendgerätes als Vermittlungseinrichtung kann die Anzeigeeinrichtung DIS beispielsweise durch ein LCD-Display (8 Zeilen à 40 Zeichen) realisiert werden.

Das Kommunikationsendgerät ist über eine Anschalteeinrichtung AE mit einer Teilnehmeranschlußleitung Asl verbunden. Über diese Teilnehmeranschlußleitung Asl kommuniziert das Kommunikationsendgerät mit einer Kommunikationsanlage. Über die Teilnehmeranschlußleitung Asl werden die 64 kBit/s umfassenden Nachrichten und die 8 kBit/s umfassenden Signalisierungsinformationen bidirektional übermittelt. Die im Signalisierungskanal übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die für die Kommunikationsendgeräte-Kommunikationsanlagen-Signalisierung eingesetzten Protokollschichten sind als Bitübertragungsschicht (Schicht 1), als Sicherungsschicht (Schicht 2) und als Vermittlungsschicht (Schicht 3) definiert. Die Bitübertragungsschicht, auch als physikalische Ebene bezeichnet, besorgt das Übermitteln der Informationen in den Nachrichten- und Signalisierungskanälen gleichzeitig in beiden Richtungen. Hierbei ist das Aktivieren, Deaktivieren und Betreiben des Kommunikationsendgerätes eingeschlossen. Die Sicherungsschicht übernimmt für die anschließende Vermittlungsschicht das gesicherte Übermitteln der Signalisierungsinformationen zwischen der Kommunikationsanlage und dem Kommunikationsendgerät. Dies kann beispielsweise durch eine HDLC-Übermittlungsprozedur oder durch eine Last-Look-Prozedur erfolgen. Unter Last-Look-Prozedur ist ein mehrmaligen Übermitteln der Informationen zu verstehen, die in der Empfangseinrichtung mindestens zweimal hintereinander als gleich erkannt und außerdem verschieden von den zuletzt empfangenen gültigen Signalisierungsinformation sein muß, um als gültig erkannt zu werden.

Die Vermittlungsschicht dient dem Aufbau, Überwachen und Abbau der Kommunikationsverbindungen sowie zur Steuerung und Kontrolle der durch die Kommunikationsanlage unterstützten Leistungsmerkmale. In der Anschlußeinrichtung werden im wesentlichen die Funktionen der Bitübertragungsschicht (Schicht 1) unter Steuerung des Mikroprozessorsystems µP realisiert. In der Anschalteeinrichtung AE sind folgende wesentliche Funktionen enthalten:
- übertragungstechnische Anpassung an die Teilnehmeranschlußleitung Asl
- Übermitteln der Signalisierungs- und Nachrichteninformationen durch nach einem Zeitgetrenntlage-Übertragungsverfahren gebildeten Signalen
- Trennen von Nachrichten- und Signalisierungsinformationen und Weiterleiten an die entsprechenden Einrichtungen und
- Auskoppeln einer über die Anschlußleitung Asl übertragenen und von der Kommunikationsanlage bereitgestellten elektrische Energie und deren Weiterführung an eine kommunikationsendgeräteinterne Stromversorgung SV.

Die Anschlußeinrichtung AE ist beispielsweise durch einen großintegrierten kundenspezifischen Schaltkreis und durch mehrere Schichtschaltungen realisiert.

In der Stromversorgung SV wird die von der Anschlußeinrichtung AE übermittelten elektrische Energie in eine für den Betrieb der Kommunikationsendeinrichtung erforderliche positive und negative Speisespannung ± U umgesetzt. Vorzugsweise sind diese Stromversorgungen SV durch platzsparende Schaltregler-Stromversorgungen realisiert.

Die in der Anschlußeinrichtung AE von über die Anschlußleitung Asl übermittelten Informationen abgetrennten Signalisierungsinformationen werden lokal-busgemäß aufbereitet und über den lokalen Bus LB an das Mikroprozessorsystem µP übermittelt. Im Mikroprozessorsystem µP werden diese Signalisierungsinformationen gemäß den der Sicherungsschicht und Vermittlungsschicht zugeordneten Funktionen weiterverarbeitet und die entsprechenden Reaktionen - z. B. Ansteuern von Ausgabeeinheiten - eingeleitet. Die in der Anschlußeinrichtung AE abgetrennten Nachrichteninformationen gelangen an eine Analog/Digital-Umsetzeinrichtung A/D. In dieser werden aus den von der Anschlußeinrichtung AE abgegebenen digitalisierten Nachrichten- bzw. Sprachsignalen analoge Sprachsignale gebildet. Die an einem weiteren Eingang der Analog/Digital-Umsetzeinrichtung A/D ankommenden analogen Sprachsignale werden in digitale Sprachsignale umgesetzt. Die Codierung bzw. Decodierung der analogen bzw. digitalen Sprachsignale erfolgt durch das bekannte, standardisierte PCM-Verfahren. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen. Durch den Akustikkoppler AK werden die von der Analog/Digital-Umsetzeinrichtung A/D ankommenden analogen Signale entweder nur an einen ersten Ausgang A1 oder an den ersten und an einen zweiten Ausgang A1, A2 vermittelt. Ausgang A1 ist über einen Vorverstärker VV mit dem Handapparat des Kommunikationsendgerätes verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von einem im Handapparat HA angeordneten Mikrophon abgegebenen Sprachsignale über den Vorverstärker VV an einen ersten Eingang E1 des Akustikkopplers AK. Die analogen Sprachsignale werden durch den Akustikkoppler AK an einen mit der Analog/Digital-Umsetzeinrichtung A/D verbundenen dritten Ausgang A3 vermittelt. Diese analogen Sprachsignale werden in der Analog/Digital-Umsetzeinrichtung A/D in digitale Signale umgesetzt und in der Anschlußeinrichtung AE in den zur Anschlußleitung Asl übermittelten Nachrichtenstrom eingefügt. Ist im Kommunikationsendgerät das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Kommunikationsendgerät angeordneten Lautsprecher LS. Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umgesetzt, durch die die Verbindungswege im Akustikkoppler AK eingestellt werden. Der Akustikkoppler AK ist beispielsweise durch in CMOS-Technik ausgeführte analoge Koppelpunkte realisiert. Zusätzlich steuert die Ansteuereinrichtung ASE einen Ruftongenerator RT, der je nach Ansteuerung unterschiedliche Ruftöne mit entsprechenden Rufrythmen erzeugt. Diese Ruftöne werden über den Akustikkoppler AK unter Steuerung der Ansteuereinrichtung ASE an den Handapparat HA und/oder den Lautsprecher vermittelt.

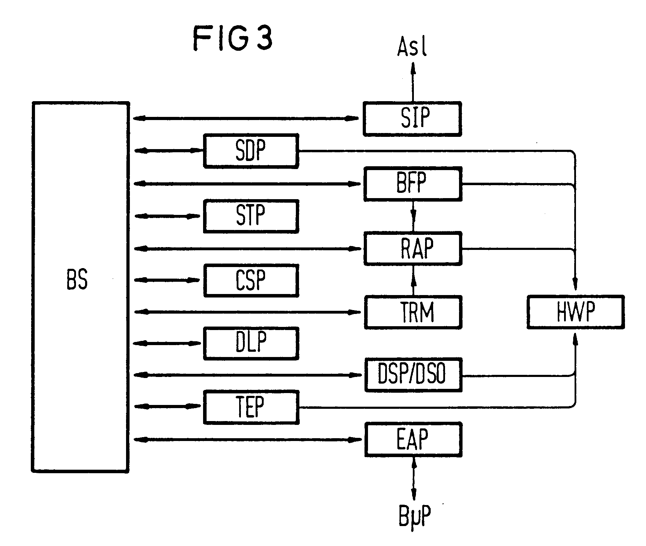

Fig. 3 zeigt die Prozeßarchitektur des Mikroprozessorsystems µP. Der Informations- bzw. Datenaustausch zwischen den einzelnen Prozessen erfolgt grundsätzlich - bis auf wenige Ausnahmen - über ein auf das Mikroprozessorsystem µP zugeschnittenes Betriebssystem. Ein derartiges Betriebssystem stellt beispielsweise das für das Siemens Mikroprozessorsystem 80 C 51 vorgesehene Betriebssystem COSMOS 51 dar. Dieses Betriebssystem bietet für den Informationsaustausch unter den Prozessen einheitliche organisatorische Schnittstellen.

Im Mikroprozessorsystem µP sind folgende Prozesse realisiert:

### - Bedienfeldprozeß BFP

Der Bedienfeldprozeß verwaltet die im Endgerät festgelegten Bedienprozeduren sowie die vermittlungstechnischen Prozeduren, die im Zusammenwirken mit der Kommunikationsanlage vorgesehen sind. Es werden nur Bedienprozeduren - initialisiert durch Tastenanreiz - verwaltet, die dem Kommunikationsendgerät bekannt sind. Derartige Prozeduren bzw. Funktionen stellen beispielsweise die
- Steuerung der Ruflautstärke
- die vermittlungstechnische Leitungsbehandlung
- Steuerung der Akustikeinrichtung usw.
dar.

### - Lokalprozeß CSP

Durch diesen Prozeß werden alle lokalen und systembezogenen Bedienprozeduren und Speicherfunktionen - wie beispielsweise Namentasten, Kurzrufnummern, Termine usw. - realisiert.

### - Anzeigeprozeß DSP/DSO

Der Anzeigeprozeß ist in einen Verwaltungs- und einen Ausgabeprozeß DSP/DSO aufgeteilt. Mit Hilfe dieses Anzeigeprozesses werden zwei unterschiedliche Anzeigengrößen - siehe Erläuterungen zu Fig. 1 - gesteuert und verwaltet. Welche der beiden Anzeigengrößen im Kommunikationsendgerät vorliegt und zu steuern bzw. verwalten ist, wird durch die von der Kommunikationsanlage übermittelten Parameterdaten bestimmt. Zu den Aufgaben des Anzeigeprozesses gehören u. a.
. das Verwalten eines Anzeigedatenspeichers,
. eine Prioritätensteuerung in Abhängigkeit der Anzeigengröße,
. ein Bilden von Uhrzeit und Datum (Tag, Monat) nach einer von der Kommunikationsanlage durch Parameterdatenübermittlung vorgegebenen Grundeinstellung und periodischer Synchronisation durch die Kommunikationsanlage.

### - Rufausgabeprozeß RAP

Durch den Rufausgabeprozeß RAP werden unterschiedliche Ruftypen gebildet und in Abhängigkeit von einer Rufpriorität an die anfordernden bzw. folgenden Prozesse übermittelt. Die Rufrythmen werden über im Rufausgabeprozeß RAP implementierte Zeitgeneratoren erzeugt. Die für das jeweilige Kommunikationsendgerät vorgesehenen Rufarten, -typen und -prioritäten werden durch die von der Kommunikationsanlage übermittelten Parameterdaten bestimmt.

### - Parameterdaten-Übermittlungsprozeß DLP

Der Parameterdaten-Übermittlungsprozeß DLP (Downloading Process) konfiguriert die Bedieneroberfläche des Kommunikationsendgerätes sowie deren Leistungsmerkmale. Er überwacht selbständig seinen Datenbereich und führt gegebenenfalls eine Fehlerkorrektur durch. Der Parameterdaten-Übermittlungsprozeß DLP stellt zusätzlich eine Reihe von Zugriffsprozeduren für anderen Prozesse zur Verfügung, über die die von ihm verwalteten Parameterdaten abgefragt werden können. Die Parameterdaten können einzeln oder blockweise nach einer Initialisierung im Kommunikationsendgerät von der Kommunikationsanlage angefordert und übermittelt werden.

### - Sicherungstechnischer Prozeß STP

Dieser zyklisch ablaufende Prozeß kontrolliert den Programm-Watchdog, legt über erfaßte Fehler Fehlerprotokolle an und überprüft nacheinander jeden im Kommunikationsendgerät eingesetzten Sub-Mikroprozessor.

### - Signalisierungsprozeß SIP

Dieser Prozeß realisiert die zentrale Datenübertragungsschnittstelle zwischen der Kommunikationsanlage und dem Kommunikationsendgerät. Mit Hilfe dieses Signalisierungsprozesses wird der Empfang und das Senden der Signalisierungsinformation durchgeführt. Die einzelnen empfangenen Signalisierungsinformationen werden hierbei im Last-Look-Verfahren - siehe Beschreibung zu Fig. 1 - bewertet. Die erkannten Signalisierungsinformationen werden in entsprechende Anreize für eine Weitergabe an die anzusteuernden Prozesse umgesetzt. Analog hierzu werden die von den übrigen Prozessen übermittelten Anreize bzw. Informationen in entsprechende Signalisierungsinformationen umgesetzt.

### -Ein-/Ausgabeprozeß EAP

Durch diesen Ein-/Ausgabeprozeß EAP ist die Schnittstelle zu den Sub-Mikroprozessoren (beispielsweise Bedienfeld-Mikroprozessor) über den seriellen Bus SB realisiert. Mit Hilfe dieses Ein-/Ausgabeprozesses EAP werden die von den Sub-Mikroprozessoren übermittelten physikalischen Daten in logische Informationen für die Ansteuerung der übrigen Prozesse umgesetzt. Analog hierzu werden die von den anderen Prozessen übermittelten logischen Informationen in physikalische Informationen für die Ansteuerung der Sub-Mikroprozessoren umgewandelt.

### - Testprozeß TEP

Der Testprozeß TEP dient im wesentlichen Testzwecken während der Entwicklungsphase und einer späteren Wartung des Kommunikationsendgerätes. Durch diesen Testprozeß werden Informationen für einen Kommunikationsendgeräte-Tester aufbereitet und an diesen übermittelt. Die kommunikationsendgeräteinternen Datenzugriffe erfolgen hierbei über in den anderen Prozessen vorhandenen Zugriffsprozeduren.

### - Hardwaretreiberprozeß HWP

Der Hardwaretreiberprozeß HWP stellt das Bindeglied zwischen den programmgesteuerten Prozessoren und den Hardwareelementen der Kommunikationsendeinrichtung dar. Er verfugt über die zur Steuerung der Hardwareelemente erforderlichen Treiberroutinen. Beispielsweise werden folgende Vorgänge vom Hardwaretreiberprozeß HWP gesteuert:
- Ein-/Ausschalten des Handapparates
- Steuerung des Rufes
- Ein-/Ausschalten des Sprachkanals
- Ein-/Ausschalten des Lautsprecherverstärkers, usw.

Der Hardwaretreiberprozeß HWP kommuniziert als einziger mit den übrigen Prozessen nicht über das Betriebssystem BS. Die Steuerinformationen gelangen oder kommen direkt von den Prozessen, in deren Ablauf die Steuerung eines dem Hardwaretreiberprozeß HWP zugeordneten Hardwareelementes vorgesehen ist. Diese Maßnahme ist sinnvoll, da bei einer Ansteuerung eines Hardwareelementes - und umgekehrt - keine unterschiedlichen Prozeßabläufe auftreten.

### - Selbsttest-Prozeß SDP

Ein Selbsttest des Kommunikationsendgerätes wird durch die Kommunikationsanlage eingeleitet und beendet. Die Ergebnisse des Selbsttest-Prozesses SDP werden akustisch und optisch angezeigt und der Kommunikationsanlage übermittelt. Zu den Selbsttest-Funktionen gehören
- ein Leuchtdiodentest
- eine Tastenkontrolle
- ein Tontest
- eine Anzeige der Fehlerspeicherinhalte
- ein Test der Hardwarekomponenten, usw.

### - ein Kalenderprozeß TRM

In diesem Kalenderprozeß TRM wird ein Terminkalender für beispielsweise 15 Eintragungen verwaltet. Die einzelnen Termine werden hierbei automatisch chronologisch eingeordnet und kontrolliert. Der Terminablauf wird akustisch durch beispielsweise einen Erinnerungsruf oder durch eine optische Anzeige gemeldet. Zusätzlich kann über eine Leuchtdiode angezeigt werden, ob sich Termine im Ablauf befinden.

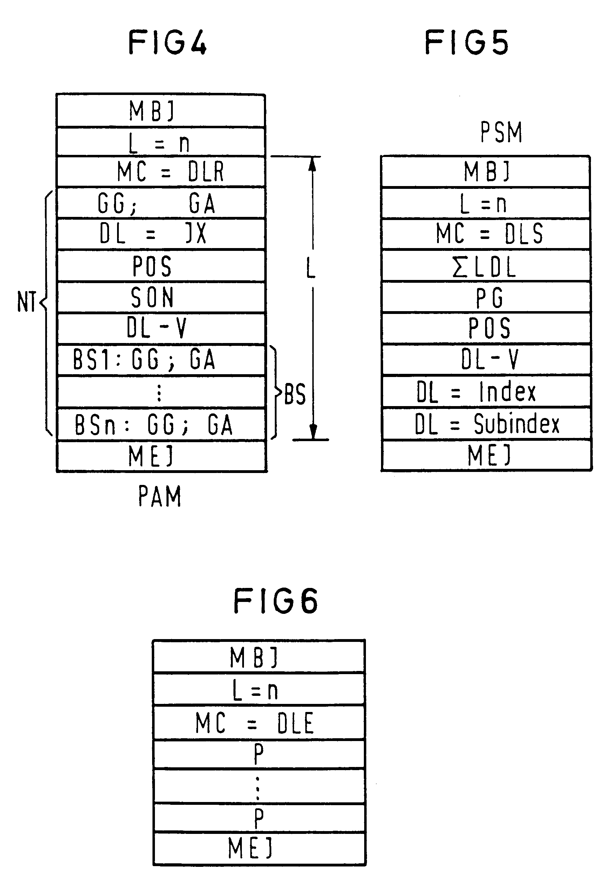

Anhand der Zeichnungen Fig. 4 bis Fig. 6 werden im folgenden die einzelnen Protokollmeldungen dargestellt und die möglichen Informationsinhalte dieser Meldungen angegeben.

So zeigt Fig. 4 eine Parameteranforderungsmeldung PAM, die im Kommunikationsendgerät KE nach
- jeder Neusynchronisierung der Signalisierung
- jeder Änderung des Ausbaus des Kommunikationsendgerätes und
- jedem Zurücksetzen der Programmsteuerung
- gebildet und an die Kommunikationsanlage KA übermittelt wird.

Jede Meldung - auch die später erläuterten - ist mit einer Meldungsbeginn- und einer Meldungsendeinformation MBI, MEI versehen. Diese Meldungsbeginn- bzw. Meldungsendeinformation MBI, MEI kann beispielsweise durch ein 1-Byte-Meldungsbeginnzeichen (beispielsweise entsprechend der HDLC-Übermittlungsprozedur) oder durch eine 2-Byte-Information - siehe die bereits angegebene Patentanmeldung DE-A-3 732 679 - gebildet werden. Für das Ausführungsbeispiel sei angenommen, daß die Meldungsbeginn- und Meldungsendeinformation MBI, MEI durch eine 2-Byte-Information gebildet ist. Hierbei ist die Bitkombination des ersten Bytes so bestimmt, daß diese nicht mit den verwendeten codierten Informationen eines folgenden Informationsteils der Parameteranforderungsmeldung PAM kollidiert. Mit diesem ersten Byte wird demnach angezeigt, daß es sich um ein Zeichen handelt, das außerhalb des Zeichenumfangs der verwendeten codierten Informationen definiert ist. Mittels des zweiten Bytes wird die Art des Zeichens bestimmt. So kann dem ersten Byte - beispielsweise mit Transportzeichen bezeichnet - eine Bitkombination, in sedezimaler Schreibweise EF, zugeordnet werden. Dem zweiten Byte kann beispielsweise für die Meldungsbeginninformation MBI die Bitkombination 'sedezimal 01' und für die Meldungsendeinformation MEI die Bitkombination 'sedezimal 02' zugeordnet werden. Diese Bitkombination kann mit derjenigen Bitkombination übereinstimmen, die den meldungslosen (IDLE-) Zustand im Signalisierungskanal angibt. An die Meldungsbeginninformation MBI ist eine beispielsweise 1-Byte-umfassende Meldungslängeninformation L angefügt. Diese Meldungslängeninformation L gibt die Anzahl n der Bytes an, die ein folgendes Informationsteil NT enthält. Die Meldungscodeinformation MC bestimmt die Art der zu übermittelnden Protokollmeldung. Da eine Parameteranforderungsmeldung PAM bestimmt werden soll, ist eine entsprechende codierte Meldungscodeinformation MC-DLR, beispielsweise sedezimal 51 H, eingetragen. Durch die folgende, beispielsweise 2-Byte umfassende Information wird der Kommunikationsendgerätetyp bestimmt. Diese Kommunikationsendgerätetypen-Information setzt sich aus einer Gerätegrößen- und einer Geräteausbauinformation GG, GA zusammen. Durch die Gerätegrößeninformation GG wird bestimmt, ob es sich beispielsweise um einen Einzelfernsprecher, einen Teamfernsprecher, einen Vermittlungsplatz oder eine betriebstechnische Konsole handelt. Die Geräteausbauinformation GA gibt den Ausbau des Kommunikationsendgerätes KE hinsichtlich der Größe der Tastatur, Größe der Anzeigen und weiterer Bedienelemente an. Die im Anschluß an die Kommunikationsendgerätetypen-Information übermittelte, beispielsweise 1-Byte umfassende Indexinformation IX gibt an, welche Art von Programmparameterdaten P von der Kommunikationsanlage KA zum Kommunikationsendgerät KE übermittelt werden sollen. So sind beispielsweise folgende anschließend aufgelistete Indexinformationen IX möglich:
- Tastenbelegungsinformationen für unterschiedliche Kommunikationsendgerätetypen und -ausbaustufen,
- akustische Rufausgaben,
- Anrufarten,
- Steuerung der Anzeigen im Kommunikationsendgerät,
- Uhrzeit,
- Festtexte,
- Leistungsmerkmale,
- Leitungsfunktionen,
- Meldungsformate,
- Übermittlung von Programmparameterdaten nicht erwünscht und
- bisher keine Programmparameterdaten P von der Kommunikationsanlage KA erhalten.

An die Indexinformation IX ist eine wiederum 1 Byte-umfassende Kommunikationsendgeräte Positionsinformation POS angefügt. Diese Positionsinformation POS kann beispielsweise durch eine logische Gerätenummer oder eine Anschlußlageninformation gebildet werden. Die Anschlußlageninformation kann beispielsweise durch eine logische oder physikalische Portnummer der Kommunikationsanlage angegeben werden.

An die Positionsinformation POS schließt sich eine Sonderausstattungsinformation SON an. Diese 1-Byte umfassende Sonderausstattungsinformation SON kann beispielsweise bitorientiert organisiert sein. So kann beispielsweise durch die Informationsinhalte der einzelnen Bits bestimmt werden, ob im Kommunikationsendgerät KE beispielsweise "Lauthören", "Freisprechen", usw. realisiert ist. Durch die anschließend übermittelte, ebenfalls 1-Byte umfassende Information DL-V wird der Kommunikationsanlage KA angezeigt, welchen Aktualisierungsgrad die im Kommunikationsendgerät KE gespeicherten Programmparameterdaten P aufweisen. Mit Hilfe dieser Information DL-V kann in der Kommunikationsanlage KA festgestellt werden, ob die im Kommunikationsendgerät KE gespeicherten Programmparameterdaten P noch dem aktuellen Stand entsprechen. An die diesen Stand der Programmparameterdaten P anzeigende Information DL-V wird eine beispielsweise 3-Byte umfassende Beistellgeräteinformation BS angefügt. Durch diese Beistellgeräteinformation BS ist das Vorhandensein, der Typ und der Ausbau von Beistellgeräten bestimmt. Hierbei wird beispielsweise ein Beistellgerät durch eine 1-Byte umfassende, aus Typen- und Ausbauinformationen GG, GA zusammengesetzte Beistellgeräteinformation BS definiert. Sind keine Beistellgeräteinformationen BS in der Parameteranforderungsmeldung PAM eingetragen, so ist kein Beistellgerät an das jeweilige Kommunikationsendgerät KE angeschlossen. Der Typ des Beistellgerätes - beispielsweise Rufnummernspeichereinrichtung oder Kartenleser - wird durch die Typeninformation GG definiert. Der Ausbau des jeweiligen Kommunikationsendgerätes - beispielsweise die Anzahl der Tasten eines Rufnummernspeichers - wird durch eine Ausbauinformation GA angegeben.

Fig. 5 zeigt den prinzipiellen Aufbau einer Parameterstartmeldung PSM. Eine Parameterstartmeldung PSM wird entweder nach Empfang und Auswertung einer Parameteranforderungsmeldung PAM oder einer kommunikationsanlageninternen Parameterübermittlungsanforderung in der Kommunikationsanlage KA erzeugt und an die Kommunikationsendgeräte KE übermittelt. Die Meldungsbeginn- und Meldungsendeinformation MBI, MEI wird hierbei entsprechend der in der Fig. 4 dargestellten Meldung gebildet. Durch eine vorgegebene, codierte - beispielsweise sedezimal 2 BH - Meldungscodeinformation MC-DLS ist eine Meldung als eine Paramemeterstartmeldung PSM bestimmt. An die Meldungscodeinformation MC ist eine Sicherungsinformation LDL angefügt. In dieser Sicherungsinformation LDL ist beispielsweise die Summe der Bytes der Programmparameterdaten P angegeben, die anschließend an die Parameterstartmeldung PSM übermittelt werden. Im Anschluß an diese Sicherungsinformation LDL wird eine 1-Byte umfassende Kommunikationsendgeräte-Typeninformation GG, GA übermittelt. Diese Kommunikationsendgeräte-Typeninformation ist - wie bereits erläutert - durch eine Gerätegrößen- und eine Geräteausbauinformation GG, GA gebildet. Alternativ hierzu kann - wie bereits in der Beschreibungseinleitung erläutert - eine Rundsende- oder Positionsgültigkeitsinformation PG eingefügt werden. Für das Ausführungsbeispiel sei angenommen, daß die Parameterstartmeldung PSM gezielt an ein Kommunikationsendgerät KE zu übermitteln ist. Somit ist in die Kommunikationsendgeräte-Typeninformation GG, GA durch eine Positionsgültigkeitsinfor mation PG gebildet. Das Eintragen der Positionsgültigkeitsinformation PG bewirkt, daß diese Parameterstartmeldung PSM an das durch eine folgende Positionsinformation POS bestimmte Kommunikationsendgerät KE übermittelt wird. Diese wiederum 1-Byte umfassende Positionsinformation POS kann beispielsweise wiederum durch eine logische Gerätenummer oder eine Anschlußlageninformation angegeben sein. An die Positionsinformation POS kann eine eine 1-Byte umfassende Information DL-V angefügt sein, die die Version, d. h. den Aktualisierungszustand der anschließend übermittelten Programmparameterdaten P, anzeigt. Die folgenden, jeweils 1-Byte umfassenden Index- und Subindexinformationen IX, SIX geben detailliert an, welche Programmparameterdaten P im Anschluß an diese Parameterstartmeldung PSM übermittelt werden. Die Indexinformationen IX werden beispielsweise durch in Fig. 1 erläuterte, codierte Informationen gebildet. Die Subindexinformationen SIX geben detailliert - wenn erforderlich - die Zuordnung der Programmparameterdaten P an. So ist beispielsweise als Subindexinformation SIX eine physikalische Tastennummerinformation eingetragen, wenn in der Indexinformation IX beispielsweise bestimmt ist, daß die zu übermittelnden Programmparameterdaten P die Tastenbelegung eines Fernsprechers beinhalten. Diese Parameterstartmeldung PSM wird von der Kommunikationsanlage KA gezielt an das durch die Positionsinformation POS bestimmte Kommunikationsendgerät KE übermittelt. In diesem Kommunikationsendgerät KE wird nach Empfang und Auswertung der Parameterstartmeldung PSM das Endgerät auf den Empfang der anschließend von der Kommunikationsanlage KA übermittelten Programmparameterdaten P vorbereitet. Diese Programmparameterdaten P werden mit Hilfe einer Parametermeldung PM von der Kommunikationsanlage KA zum Kommunikationsendgerät KE übermittelt.

Fig. 6 zeigt den prinzipiellen Aufbau einer Parametermeldung PM. Meldungsbeginn-, Meldungsende- und Längeninformation MBI, MEI, L sind wiederum entsprechend Fig. 4 gebildet. Durch eine vorgegebene codierte - beispielsweise sedezimal 2 BH - Meldungscodeinformation DLE ist eine Meldudng als eine Parametermeldung PM bestimmt. Im Anschluß an die Meldungscodeinformation DLE werden die Programmparameterdaten P übertragen. Üblicherweise wird die Anzahl der Bits bzw. Bytes je Parametermeldung PM auf eine vorgegebene Anzahl - beispielsweise 128 Byte - begrenzt. Übersteigt die Menge der Programmparameterdaten die maximale Meldungslänge einer Parametermeldung PM, werden diese durch mehrere Parametermeldungen PM übermittelt. Im Kommunikationsendgerät KE werden die Parameterdaten P empfangen und entsprechend der in der Parameterstartmeldung PSM übermittelten Index- und Subindexinformationen IX, SIX in den jeweils zugeordneten Speicherbereichen des Speichers M der Kommunikationsendeinrichtung KE gespeichert.

## Patentansprüche

1. Kommunikationssystem mit einer programmgesteuerten Kommunikationsanlage bzw. Vermittlungseinrichtung, an die mehrere programmgesteuerte als Einzel- und/oder Reihenanlagen und/oder Vermittlungsplatz und/oder betriebstechnische Bedieneinrichtung ausgebildete Kommunikationsendgeräte anschließbar sind, und die mit den Kommunikationsendgeräten über jeweils einen Signalisierungsduplexkanal mit Hilfe eines meldungsorientierten Übermittlungsprotokolls im Sinne eines Signalisierungs- und Betriebstechnik-Informationsaustausches kommuniziert, wobei die den Kommunikationsendgeräten zugeordneten Funktionen jeweils durch eine in diesen angeordnete programmgesteuerte Steuereinrichtung (µP) realisiert sind,
**dadurch gekennzeichnet,**
daß ein zumindest für alle anschließbaren Kommunikationsendgeräte gleichen Typs gleiches Programm zur Realisierung von den Kommunikationsendgeräten zuordenbaren Funktionen
- zur Steuerung manueller oder akustischer Eingabe- und optischer oder akustischer Ausgabemittel (DIS, HS, LS, BµB),
- zur Steuerung von Eingabe-gesteuerten vermittlungstechnischen und betriebstechnischen Prozeduren (DSP/DSO, RAP, BFP, DLP), und
- zur Steuerung lokaler Leistungsmerkmale
in den Programmspeichern (PS) der an die Kommunikationsanlage anschließbaren Kommunikationsendgeräte gespeichert und derart ausgestaltet ist,
daß die für das jeweilige Kommunikationsendgerät vorgesehenen Funktionen und Unterfunktionen (DLP) durch einem Datenspeicher (DS) vorgegeben zugeordnete und programmablaufbeeinflußbare Programmparameter ausgewählt und zumindest teilweise gesteuert werden,
- und daß das Kommunikationssystem und die Kommunikationsendgeräte derart ausgestaltet sind, daß das erstmalige Übermitteln oder Aktualisieren von die Programmparameter repräsentierenden Parameterdaten an die Kommunikationsendeinrichtungen mit Hilfe der meldungsorientierten Übermittlungsprozedur (SIP) aufgrund einer Initialisierung im Kommunikationsendgerät oder in der Kommunikationsanlage erfolgt.

2. Kommunikationssystem nach Anspruch 1,
**dadurch gekennzeichnet,**
daß das Programm zur Realisierung der kommunikationsendgeräteindividuellen Funktionen jeweils
- einen die im Endgerät festgelegten Bedienprozeduren realisierenden,
- einen alle lokalen Bedienprozeduren realisierenden (BFP),
- einen die Anzeigeinformationen verwaltenden (DSP/DSO),
- einen die Rufausgabe realisierenden (RAP),
- einen die die Parameter repräsentierenden Daten verwaltenden und Zugriffsprozeduren steuernden (DLP),
- einen die Sicherungstechnik im Kommunikationsendgerät steuernden (STP),
- einen die Signalisierung realisierenden bzw. steuernden (SIP),
- einen die Ein- und Ausgabeprozeduren zu einem das Bedienfeld steuernden Prozessor realisierenden (EAP),
- einen Kommunikationssystem-Test unterstützenden (TEP),
- einen das Bindeglied zwischen Soft- und Hardware realisierenden,
- einen einen Kommunikationsendgeräte-Selbsttest realisierenden (HWP) und
- einen einen Terminkalender einschließlich der optischen und akustischen Steuermittel realisierenden (TRM)
Prozeß aufweist und derart ausgestaltet ist, daß der Informationsaustausch zwischen den Prozessen über ein einheitliche Schnittstellen beinhaltendes Betriebssystem (BS) erfolgt,
- und der das Bindeglied zwischen Soft- und Hardware realisierende Prozeß (HWP) direkt mit den Prozessen kommuniziert, in deren Prozeßablauf eine Steuerung von Hardwaremitteln vorgesehen ist.

3. Kommunikationssystem nach einem der vorhergehenden Ansprüche,
**dadurch gekennzeichnet,**
daß die manuellen Eingabemittel durch Tastenelemente realisiert sind und durch die Parameter Tastenebenen und funktionale Tastenbelegung bestimmt werden.

4. Kommunikationssystem nach Anspruch 1,
**dadurch gekennzeichnet,**
daß die akustischen Ein- und Ausgabemittel (HA, LS) durch im Handapparat oder der Kommunikationsendeinrichtung angeordnete Mikrophone, Hörkapseln (HA) oder Lautsprecher (LS) realisiert sind und durch die Parameterdaten deren Vorhandensein oder Berechtigung der Benutzung bestimmt wird.

5. Kommunikationssystem nach einem der vorhergehenden Ansprüche,
**dadurch gekennzeichnet,**
daß die optischen Ausgabemittel (DIS) durch unterschiedliche Flüssigkristall (LCD)-Anzeigen und Leuchtdioden (LED) realisiert sind und der verwendete Zeichensatz, die Anzahl der virtuellen Anzeigeebenen und die Aufteilung innerhalb dieser Anzeigeebenen durch die Parameterdaten bestimmt ist.

6. Kommunikationssystem nach einem der vorhergehenden Ansprüche,
**dadurch gekennzeichnet,**
daß das Kommunikationsendgerät derart ausgestaltet ist, daß durch einen Tastenelementeanreiz unterschiedliche vermittlungstechnische Prozeduren zuordenbar sind und durch die Parameterdaten deren Zuordnung angegeben wird.

7. Kommunikationssystem nach einem der vorhergehenden Ansprüche,
**dadurch gekennzeichnet,**
daß bei Einsatz einer Bedien- oder Wartungseinrichtung eine alle Tastenelementeanreize direkt übertragende betriebstechnische Prozedur realisiert ist.

8. Kommunikationssystem nach einem der vorhergehenden Ansprüche,
**dadurch gekennzeichnet,**
daß das Kommunikationsendgerät derart ausgestaltet ist, daß
- nach jeder Neusynchronisierung der Signalisierung,
- jeder Änderung des Ausbaus des Kommunikationsendgerätes und
- jedem Zurücksetzen der Programmsteuerung
eine Parameteranforderungsmeldung gebildet und an die Kommunikationsanlage übermittelt wird, daß die Kommunikationsanlage derart ausgestaltet ist, daß nach Empfang einer Parameteranforderungsmeldung oder einer internen Initialisierung eine die Adressenkriterien und Index- sowie Subindexinformationen enthaltende Parameterstartmeldung gebildet und an ein, an eine Gruppe oder an alle Kommunikationsendgeräte übermittelt wird und anschließend mindestens eine die Daten enthaltende Parametermeldung in der Kommunikationsanlage gebildet und an ein, eine Gruppe oder an alle Kommunikationsendgeräte übermittelt wird.

9. Kommunikationssystem nach Anspruch 8,
**dadurch gekennzeichnet,**
daß die Parameteranforderungsmeldung, Parameterstartmeldung und Parametermeldung durch
- eine Meldungsbeginninformation,
- eine die summarische Prüfung der übermittelten Informationen erlaubende Information,
- eine den Meldungstyp bestimmende Meldungscodeinformation,
- einen Informationsteil,
. der bei einer Parameteranforderungsmeldung die Identifikationsinformationen,
. bei einer Parameterstartmeldung die Adressenkriterien und Index- sowie Subindexinformationen und
. bei einer Parametermeldung die die Parameter repräsentierenden Daten enthält und
- eine Meldungsendeinformation
bestimmt ist.

10. Kommunikationssystem nach Anspruch 9,
**dadurch gekennzeichnet,**
daß
- die Identifikationsinformation durch
. eine aus Gerätegrößen- und Geräteausbauinformation gebildeten Kommunikationsgeräte-Typinformation
. eine aus Sonderausstattungs- und Beistellinformation gebildeten Kommunikationsendgeräte-Ausstattungsinformation und
. einer aus Gerätenummer- oder Anschlußlageninformation gebildeten Positionsinformation
bestimmt ist,
- daß die Adressenkriterien durch eine Gerätegrößen zusammen mit einer Geräteausbauinformation oder einer Rundsende- oder einer Positionsgültigkeitsinformation bestimmt sind.

11. Kommunikationssystem nach einem der Ansprüche 8 bis 10,
**dadurch gekennzeichnet,**
daß die Parameterstartmeldung derart ausgestaltet ist, daß eine die summarische Überprüfung der übermittelten Parameterdaten ermöglichende Information einfügbar ist.

12. Kommunikationssystem nach den Ansprüchen 8 bis 11,
**dadurch gekennzeichnet,**
daß die letzte einer Parameterstartmeldung zugeordnete Parametermeldung derart ausgestaltet ist, daß diese durch eine das Übermittlungsende anzeigende, vorgegebene Meldungscodeinformation bestimmbar ist.

## Claims

1. Communications system comprising a program-controlled communications installation or switching system, to which a number of program-controlled communications terminals, constructed as individual and/or series installations and/or operator's position and/or administration and maintenance operating facility, can be connected, and which communicates with the communications terminals via in each case one signalling duplex channel using a message-oriented transmission protocol for an exchange of signalling and administration and maintenance information, the functions allocated to the communications terminals in each case being implemented by a program-controlled controller (µP) arranged therein, characterized in that a program, which is identical at least for all connectable communications terminals of the same type, for implementing functions which can be allocated to the communications terminals
- for controlling manual or acoustic input means and optical or acoustic output means (DIS, HS, LS, BµB),
- for controlling input-controlled switching-oriented and administration and maintenance procedures (DSP/DSO, RAP, BFP, DLP), and
- for controlling local user facilities
is stored in the program memories (PS) of the communications terminals which can be connected to the communications installation, and is designed in such a manner that the functions and subfunctions (DLP) provided for the respective communications terminal are selected, and at least partially controlled, by program parameters which are pre-allocated to a data memory (DS) and which can be influenced by the program sequence,
- and in that the communications system and the communications terminals are constructed in such a manner that the initial transmission or updating of parameter data representing the program parameters to the communications terminals is effected with the aid of the message-oriented transmission procedure (SIP) on the basis of an initialization in the communications terminal or in the communications installation.

2. Communications system according to Claim 1, characterized in that the program for implementing the communications-terminal-individual functions exhibits in each case
- a process implementing the operating procedures defined in the terminal,
- a process implementing all local operating procedures (BFP),
- a process administering the display information items (DSP/DSO),
- a process implementing the ringing output (RAP),
- a process administering the data representing the parameters and controlling access procedures (DLP),
- a process controlling the dependability system in the communications terminal (STP),
- a process implementing and, respectively, controlling the signalling (SIP),
- a process implementing the input and output procedures to a processor controlling the operating panel (EAP),
- a process supporting the communications system test (TEP),
- a process implementing the link between software and hardware,
- a process implementing a communications terminal self-test (HWP) and
- a process implementing a date calendar including the optical and acoustic control means (TRM),
and is designed in such a manner that the information exchange between the processes is effected via an operating system (BS) containing uniform interfaces,
- and the process (HWP) implementing the link between software and hardware communicates directly with the processes whose process execution includes a control of hardware means.

3. Communications system according to one of the preceding claims, characterized in that the manual input means are implemented by key elements, and key levels and functional key allocation are determined by the parameters.

4. Communications system according to Claim 1, characterized in that the acoustic input and output means (HA, LS) are implemented by microphones, receiver capsules (HA) or loudspeakers (LS) arranged in the handset or the communications terminal and the parameter data determine their presence or authorization for use.

5. Communications system according to one of the preceding claims, characterized in that the optical output means (DIS) are implemented by different liquid-crystal displays (LCD) and light-emitting diodes (LED) and the parameter data determine the character set used, the number of virtual display levels and the division within these display levels.

6. Communications system according to one of the preceding claims, characterized in that the communications terminal is designed in such a manner that different switching-oriented procedures can be allocated by means of a key element stimulus and their allocation is specified by the parameter data.

7. Communications system according to one of the preceding claims, characterized in that an administration and maintenance procedure directly transmitting all key element stimuli is implemented when an operating or maintenance device is used.

8. Communications system according to one of the preceding claims, characterized in that the communications terminal is designed in such a manner that a parameter request message is formed and transmitted to the communications installation
- after each re-synchronization of the signalling,
- each change in the configuration of the communications terminal and
- each resetting of the program control,
in that the communications installation is designed in such a manner that a parameter start message containing the address criteria and index and subindex information items is formed and transmitted to one, to a group of or to all communications terminals after reception of a parameter request message or an internal initialization and subsequently at least one parameter message containing the data is formed in the communications installation and transmitted to one, a group of or to all communications terminals.

9. Communications system according to Claim 8, characterized in that the parameter request message, parameter start message and parameter message is determined by
- a start-of-message information item,
- an information item allowing the summary test of the information items transmitted,
- a message code information item determining the message type,
- an information section which contains
· the identification information items in the case of a parameter request message,
· the address criteria and index and subindex information items in the case of a parameter start message, and
· the data representing the parameters in the case of a parameter message, and
- an end-of-message information item.

10. Communications system according to Claim 9, characterized in that
- the identification information item is determined by
· a communications equipment type information item formed by equipment size and equipment configuration information,
· a communications terminal equipment information item formed by special equipment and adaptor information, and
· a position information item formed by equipment number or line location information,
- in that the address criteria are determined by an equipment size together with an equipment configuration information item or a broadcasting or position validity information item.

11. Communications system according to one of Claims 8 to 10, characterized in that the parameter start message is designed in such a manner that an information item enabling summary checking of the transmitted parameter data can be inserted.

12. Communications system according to Claims 8 to 11, characterized in that the last parameter message allocated to a parameter start message is designed in such a manner that it can be determined by a predetermined message code information item indicating the end of transmission.

## Revendications

1. Système de communication comportant une installation de communication ou un dispositif de commutation, commandée par programme, à laquelle ou auqel peuvent être reliés plusieurs terminaux de communication commandés par programme et formés en tant qu'installation individuelle et/ou installation série et/ou emplacement de commutation et/ou dispositif de service à technique d'exploitation, et qui communique avec les terminaux de communication, par l'intermédiaire d'un canal duplex de signalisation, à l'aide d'un protocole de transmission orienté vers la signalisation, dans le sens d'un échange d'informations de signalisation et de technique d'exploitation, les fonctions associées aux terminaux de communication étant réalisées respectivement par un dispositif de commande (µP) commandé par programme et disposé dans ces terminaux,
caractérisé par le fait
qu'un programme identique au moins pour tous les terminaux de communication de même type susceptibles d'être connectés, et destiné à la réalisation des fonction qui peuvent être associées aux terminaux de communication et qui sont destinées à
- la commande de moyens d'introduction manuels ou acoustiques et de moyens d'émission optiques ou acoustiques (DIS, HS, LS, BµB),
- la commande de procédures (DSP/DSO, RAP, BFP, DLP) à technique de commutation et à technique d'exploitation commandées en entrée, et
- la commande de caractéristiques locales de puissance,
est mémorisé dans les mémoires de programmes (PS) des terminaux de communication qui peuvent être connectés à l'installation de communication, et est agencé de telle sorte que les fonctions et les sous-fonctions (DLP) prévues pour le terminal de communication respectif sont sélectionnées et sont commandées au moins en partie, par des paramètres de programme prédéterminés, associés à une mémoire de données (DS) et susceptibles d'être influencés dans le déroulement du programme,
et que le système de communication et les terminaux de communication sont agencés de telle sorte que la détermination ou l'actualisation, effectuée la première fois, des données de paramètres représentant les paramètres de programmes s'effectue au niveau des terminaux de communication à l'aide de la procédure (SIP) de transmission orientée vers la signalisation, sur la base d'une initialisation dans le terminal de communication ou dans l'installation de communication.

2. Système de communication suivant la revendication 1
caractérisé par le fait
que le programme de réalisation des fonctions individuelles à chaque terminal de communication comporte un processus
- qui réalise les procédures de service déterminées dans le terminal,
- qui réalise (BFP) toutes les procédures de service locales,
- qui évalue (DSP/DSO) les informations d'indication,
- qui réalise (RAP) l'émission d'appel,
- qui évalue les données représentant les paramètres et qui commande (DLP) les procédures d'accès,
- qui commande (STP) la technique de sécurité dans le terminal de communication,
- qui réalise et commande (SIP) la signalisation,
- qui réalise (EAP) les procédures de réception et d'émission d'un processeur commandant le champ de service,
- qui maintient (TEP) un test du système de communication,
- qui réalise les circuits de liaison entre le logiciel et le matériel informatique,
- qui réalise (HWP) un test automatique des terminaux de communication, et
- qui réalise (TRM) un calendrier terminal y compris les moyens de commande optiques et acoustiques
et le programme est agencé de telle sorte que l'échange d'informations entre les processeurs s'effectue par l'intermédiaire d'un système d'exploitation (BS) comportant une interface par unité,
- et le processus (HWP) réalisant le circuit de liaison entre le logiciel et le matériel informatique communique directement avec les processus au cours desquels est prévue une commande des moyens de matériel informatique.

3. Système de communication suivant l'une des revendications précédentes,
caractérisé par le fait que les moyens manuels d'introduction sont réalisés par des éléments à touches et des plans de touches et des occupations de touches fonctionnelles sont déterminés par les paramètres.

4. Système de communication suivant la revendication 1,
caractérisé par le fait que les moyens acoustiques d'introduction et d'émission (HA, LS) sont réalisés par des microphones, des récepteurs (HA) ou des hauts-parleurs (LS) disposés dans le combiné ou dans le terminal de communication, et que leur présence ou leur autorisation d'utilisation est déterminée par les données de paramètres.

5. Système de communication suivant l'une des revendications précédentes,
caractérisé par le fait que les moyens optiques d'émission (DIS) sont réalisés par différents indicateurs à cristaux liquides (LCD) et différentes diodes électroluminescentes (LED), et le jeu de caractères utilisé, le nombre de plans d'indication virtuels et la répartition dans ces plans d'indication sont déterminés par les données de paramètres.

6. Système de communication suivant l'une des revendications précédentes,
caractérisé par le fait que le terminal de communication est agencé de telle sorte que différentes procédures à technique de commutation sont susceptibles d'être associées par un déclenchement des éléments à touches, et leur association est établie par les données de paramètres.

7. Système de communication suivant l'une des revendications précédentes,
caractérisé par le fait que, lors de l'utilisation d'un dispositif d'attente ou de service, une procédure à technique d'exploitation transmettant directement tous les déclenchements d'éléments à touches est réalisée.

8. Système de communication suivant l'une des revendications précédentes,
caractérisé par le fait que le terminal de communication est agencé de telle sorte qu'une signalisation de demande de paramètre est formée
- après chaque nouvelle synchronisation de la signalisation,
- après chaque modification de l'agencement du terminal de communication, et
- après chaque remise à l'état initial de l'unité de commande à programme,
et est transmise à l'installation de communication, que l'installation de communication est agencée de telle sorte qu'après la réception d'une signalisation de demande de paramètre ou d'une initialisation interne, une signalisation de départ de paramètre, comportant les critères d'adresses et les informations d'index et de sous-index, est formée et est transmise à un terminal de communication, à un groupe de terminaux de communication ou à tous les terminaux de communication, et qu'ensuite au moins une signalisation de paramètres comportant les données est formée dans l'installation de communication et est transmise à un terminal de communication, à un groupe de terminaux de communication ou à tous les terminaux de communication.

9. Système de communication suivant la revendication 8,
caractérisé par le fait que la signalisation de demande de paramètres, la signalisation de départ de paramètres et la signalisation de paramètres sont déterminées par
- une information de début de signalisation,
- une information autorisant le contrôle sommaire des informations transmises,
- une information de code de signalisation déterminant le type de la signalisation,
- une partie d'information, qui comporte
. les informations d'identification, pour une signalisation de demande de paramètres,
. les critères d'adresses et les informations d'index et de sous-index, pour une signalisation de départ de paramètres, et
. les données représentant les paramètres, pour une signalisation de paramètres,
- une information de fin de signalisation.

10. Système de communication suivant la revendication 9,
caractérisé par le fait
- que l'information d'identification est déterminée par
. une information de type des circuits de communication formée à partir d'une information concernant la grandeur du circuit et l'agencement du circuit,
. une information d'agencement du terminal de communication formée à partir d'une information concernant l'agencement particulier et la contribution, et
. une information de position formée à partir d'une information concernant le numéro du circuit et la position du raccordement,
- et que les critères d'adresses sont déterminés par une grandeur du circuit, conjointement avec une information concernant l'agencement du circuit ou une information concernant la validité de l'émission circulaire et concernant la validité de la position.

11. Système de communication suivant l'une des revendications 8 à 10,
caractérisé par le fait que la signalisation de départ de paramètres est agencée de telle sorte qu'une information permettant le contrôle sommaire des données de paramètres transmises peut être introduite.

12. Système de communication suivant les revendications 8 à 11,
caractérisé par le fait que la dernière signalisation de paramètres associée à une signalisation de départ de paramètres est agencée de telle sorte qu'elle peut être déterminée par une information de code de signalisation prédéterminée et indiquant l'émission de transmission.
